# EUROPEAN PATENT APPLICATION

(11) **EP 3 333 797 A1**
(43) Date of publication of application: **13.06.2018**
(21) Application number: 16306640.0
(22) Date of filing: 08.12.2016
(51) Int. Cl.: G06Q 50/00

(54) **WEARABLE DEVICE FOR FACILITATING INTERACTION BETWEEN INDIVIDUALS**

(71) Applicant: Alcatel Lucent, 91620 Nozay (FR)
(72) Inventor: LAHOTI, Preethi, 02150 Espoo (FI); SALA, Alessandra, DUBLIN, 15 (IE); AJWANI, Deepak, DUBLIN, 15 (IE); NICHOLSON, Patrick, DUBLIN, 15 (IE)
(74) Representative: Mouney, Jérôme

(57) **Abstract**

For facilitating social interaction between people, a management server (MS):
stores areas of interests provided by users,
produces different clusters of users, each cluster being based on a given area of interests,
assigns configuration codes respectively to the clusters, all the users who belong to a same cluster being assigned a same configuration code,
encodes the configuration codes respectively into two-dimensional barcodes, each two-dimensional barcode providing, once scanned by a mobile device, a device configuration code to be sent to a wearable device (WB) that configures light sources according to the received configuration code.

## Description

### FIELD OF INVENTION

The present subject matter generally relates to wearable devices that facilitate meeting and grouping of like-minded individuals.

### BACKGROUND

An important goal of a conference or meeting is to facilitate interaction between individuals of similar interests. However, in large gatherings, most attendees are able to meet only a limited set of new people, hardly if-ever having an unplanned, but fruitful, meeting that could lead to potential collaboration/business. Either people know each other from before the conference or they end up meeting people who are not similar enough to merit a deeper collaboration/business. The inefficiencies in the process of discovering people in large events greatly limits the benefits of the current conferencing systems.

Existing technologies are specialized recommendation systems in specific areas such as match-making for dating websites. However, these technologies do not provide visual guidance to the user for navigating in a physical environment to discover people of similar interests. Furthermore, such recommendation systems are highly specialized and domain-specific.

Finally, there is a need for a wearable device for the purpose of facilitating discovery of people of similar interests.

### SUMMARY

This summary is provided to introduce concepts related to the present inventive subject matter. This summary is not intended to identify essential features of the claimed subject matter nor is it intended for use in determining or limiting the scope of the claimed subject matter.

In one implementation, a method for facilitating social interaction between people is described. The method comprises the following steps in a management server:
storing areas of interests provided by users,
producing different clusters of users, each cluster being based on a given area of interests,
assigning configuration codes respectively to the clusters, all the users who belong to a same cluster being assigned a same configuration code,
encoding the configuration codes respectively into two-dimensional barcodes, each two-dimensional barcode providing, once scanned by a mobile device, a device configuration code to be sent to a wearable device that configures light sources according to the received configuration code.

Advantageously, the wearable bracelet device acts as a visual cue for a guided discovery of like-minded individuals.

In an embodiment, light sources are light-emitting diodes.

In an embodiment, configuration codes are uniquely generated or selected from a pre-existing database of configuration codes.

In an embodiment, a device configuration code corresponds to settings to be applied for a wearable device.

In an embodiment, said settings specify the color and pattern of the light-emitting diodes.

In an embodiment, the different clusters of users are produced once an event registration is closed.

In an embodiment, the event registration is closed after a deadline or once a given number of users have registered.

In an embodiment, the two-dimensional barcode is a Quick Response code.

In an embodiment, areas of interests provided by users are stored in correspondence with identifiers of the users and each identifier of user is assigned a configuration code.

In another implementation a management server for facilitating social interaction between people is described. The management server comprises:
means for storing areas of interests provided by users,
means for producing different clusters of users, each cluster being based on a given area of interests,
means for assigning configuration codes respectively to the clusters, all the users who belong to a same cluster being assigned a same configuration code,
means for encoding the configuration codes respectively into two-dimensional barcodes, each two-dimensional barcode providing, once scanned by a mobile device, a device configuration code to be sent to a wearable device that configures light sources according to the received configuration code.

In another implementation a system for facilitating social interaction between people is described. The system comprises:
a management server arranged to
store areas of interests provided by users,
produce different clusters of users, each cluster being based on a given area of interests,
assign configuration codes respectively to the clusters, all the users who belong to a same cluster being assigned a same configuration code,
encode the configuration codes respectively into two-dimensional barcodes to be scanned by a mobile device, and
a wearable device arranged to
receive a device configuration code sent from a mobile device,
configure light sources according to the received configuration code.

In an embodiment, the device configuration code is sent to the wearable device via a NFC link or a Bluetooth LE link.

In an embodiment, means for receiving and configuring are built in a system on chip.

In another implementation a computer-readable medium having embodied thereon a computer program for executing a method for facilitating social interaction between people. Said computer program comprises instructions which carry out steps according to the method according to the invention.

### BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
FIG. 1 illustrates a schematic block diagram of a communication system according to one embodiment of the invention for method for facilitating social interaction between people.
FIG. 2 illustrates a flow chart illustrating a method for facilitating social interaction between people according to one embodiment of the invention.

The same reference number represents the same element or the same type of element on all drawings.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

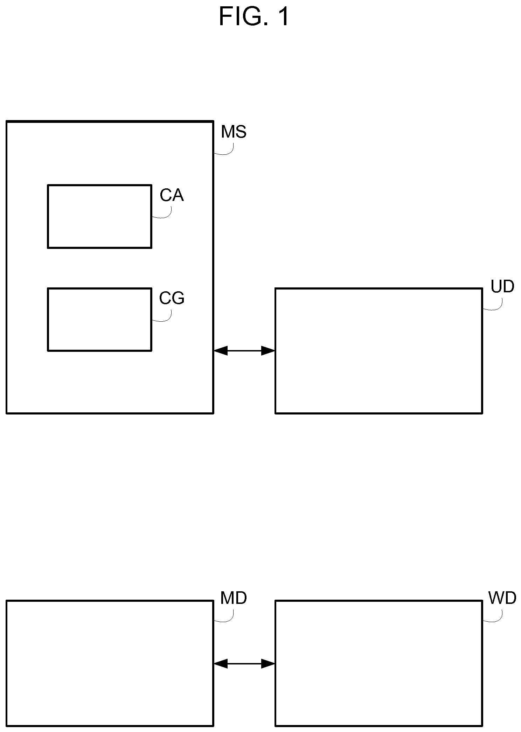

Referring to FIG. 1, a communication system comprises a management server MS, a user device UD, a mobile device MD and a wearable device WD.

The management server MS is responsible for generating codes to be used by applications to configure wearable devices. In one embodiment, the entity managing the management server MS is the same entity managing the delivery of the wearable devices.

The management server MS includes a clustering agent CA and a code generator CG.

The clustering agent CA manages an event registration through a user interface for users that provide areas of interest. The provided areas of interest are stored in a database in correspondence with identifiers IdU of users. The registration is closed for example after a deadline or once a given number of users have registered.

Once the event registration is closed, the clustering agent CA performs a hierarchical clustering for all the registered users, producing a number N of unique clusters. Each cluster corresponds to a unique area of interest. For example, via an event registration website, users can select an area of interest among a predefined list of areas of interest.

For each cluster the clustering agent CA assigns a unique configuration code. This configuration code corresponds to settings to be applied for a wearable device and is generated by the code generator CG. For example, with a wearable device implementing RGB LEDs (Red Green Blue Light-Emitting Diode), this configuration code will specify which RGB LEDs should be set, what should be the RGB color combination for the LEDs. A System on Chip on the wearable device will use this information to set the LEDs according to the configuration code. This configuration code can be selected from a pre-existing database of configuration codes. This can be easily implemented using a hash table. For example, assuming that we have 12 values for color1/color2 each and 6 values for patterns we can encode 864(12 X 12 X 6) unique configuration codes.

The clustering agent CA assigns the configuration code of the cluster to all the users who belong to the cluster. Thus all the users belonging to the same cluster (representing a group of people of similar interests) will have the same color/pattern on their wearable devices.

In one embodiment, the clustering agent CA assigns color and pattern to clusters which are close to each other. For instance, this can be performed by a low-distortion embedding of cluster centers to a 3-dimensional grid - the three dimensions corresponding to the two colors and a pattern.

For each user, the configuration code is encoded into a two-dimensional barcode, like a Quick Response (QR) code, for example using ISO/IEC 18004:2015 standard, and thus associated with the corresponding identifier IdU of the user. Finally, each user is assigned a two-dimensional barcode code which corresponds to the configuration of a wearable device to be carried by the user.

The user device UD is able to communicate with the managing server MS. The user device UD can be a mobile terminal, a personal computer or other client device such as a smartphone, a tablet. By means of the user device UD, a user can register to an event by the managing server and provide areas of interests.

The mobile device MD is able to communicate with the wearable device WD. The mobile device MD can be a mobile terminal, a laptop or other client device such as a smartphone, a tablet. The mobile device MD is able to store an application in a memory module, loaded via disk or downloaded to the memory module via a network interface. Details of said application can be provided to the user owning the mobile device in order that said application is installed in the mobile device.

The mobile device MD is able to scan a two-dimensional barcode that can be interpreted by the application. The application decodes the two-dimensional barcode to a device configuration code and sends it to the wearable device WB. This mechanism could be enabled using NFC (Near Field Communication) or Bluetooth LE (Low Energy) and a JSON (JavaScript Object Notation) data exchange.

The wearable device WD is a communicating device that can be carried on a user. For example, the wearable device WD is a bracelet or amulet fabricated using material such as silicone or (other) in which RGB LEDs can be pre-installed and patterns can be etched. If the wearable device WD is a bracelet, it could be either flexible enough to wear it by sliding it into to the wrist or be detachable in between to wear it. The wearable device WD should be easily visible by other people.

The wearable device WD comprises an inbuilt battery and a provision to replace the battery. In case of detachable wearable device, an opening can be used to replace the battery.

The wearable device WD comprises a communication stack to communicate with a mobile device MD sufficient to communicate small amount information such as device configuration code. For example, the communication stack supports NFC or Bluetooth LE.

The wearable device WD comprises a System on Chip including a color and pattern processing which receives a device configuration code and configures the RGB LEDs to the appropriate color and pattern. The System on Chip receives a configuration code and configures the RGB LEDs according to the configuration code. This device configuration code will, for example, specify which RGB LEDs should be set, what should be the RBG color combination for each LED.

If a user wishes to change areas of interests (e.g., to meet a different set of people), the user can easily do so on the event registration website hosted by the management server, get a different QR code and re-configure the wearable device using the application on the mobile device MD and the new QR code.

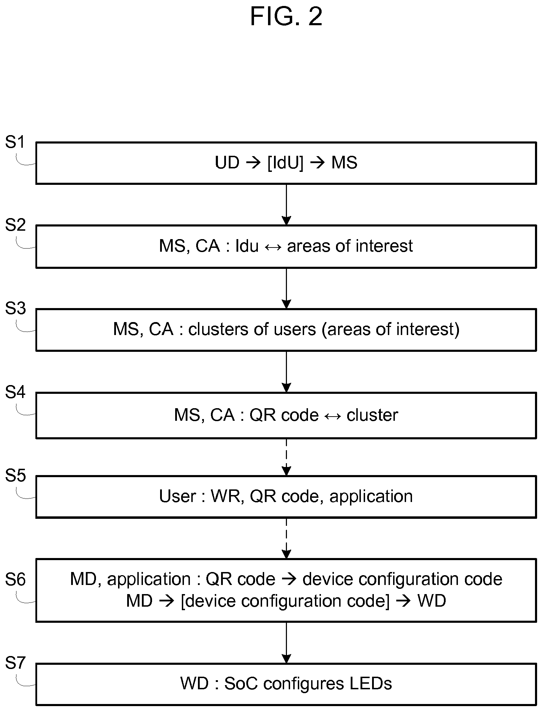

With reference to FIG. 2, a method for facilitating social interaction between people according to one embodiment of the invention comprises steps S1 to S7 executed within the communication system.

In step S1, users register to an event registration website hosted by the management server MS using login credentials and are authenticated by means of a classic authentication mechanism. At least, each user sends an identifier IdU of the user to the management server MS via a user device UD.

In step S2, the users provide areas of interests that are stored by the clustering agent CA in a database in correspondence with the identifiers IdU of the users.

In step S3, once the event registration is closed, the clustering agent CA performs a hierarchical clustering for all the registered users, producing a number N of unique clusters and each cluster being based on a given area of interests. Users having same areas of interests are grouped in the same cluster.

In step S4, the clustering agent CA assigns a configuration code to each cluster and thus assigns the configuration code of the cluster to all the users who belong to the cluster. Each configuration code is uniquely generated by the code generator CG and corresponds to settings to be applied for a wearable device. The clustering agent CA encodes the configuration codes into a two-dimensional barcode codes, like QR codes, and associates each of them with the identifiers IdU of the users belonging to the same cluster. Each user is assigned a two-dimensional barcode which corresponds to the configuration of a wearable device to be carried by the user.

Each user attending to the event should receive an attendee kit comprising especially a two-dimensional barcode code associated with the identifier IdU of the user. For example, a link is created between the identifier IdU of the user and a means to identify physically the user, in order to give him/her the attendee kit.

In step S5, on the first day of the event, each user as attendee receives a wearable device WD, a two-dimensional barcode and details of an application to be installed in the mobile device of the user. The user scans the two-dimensional barcode using the installed application.

In step S6, the application in the mobile device MD decodes the two-dimensional barcode to a device configuration code and sends it to the wearable device WD, via a NFC link or a Bluetooth LE link for example.

In step S7, the System on Chip of the wearable device WD configures the RGB LEDs according to the received configuration code.

In a first illustrative example, Alice is a person planning to attend a technical conference. Alice opens the conference registration page to register for the conference. On the registration page, among other things, Alice is asked to enter her areas of interests. Alice completes her registration and receives an email confirming her registration to the event.

On the first day of conference Alice is given an attendee kit which contains a wearable device, a QR code, and details of a phone application accompanying the device. Alice pairs her smart phone to the wearable device using Bluetooth, opens the application and scans the QR code using her phone. The application decodes the QR code to a device configuration code and sends it to the wearable device. The wearable device sets the LEDs and pattern according to the configuration code. Now, the device is glowing with color and pattern corresponding to the areas of interests that Alice has previously provided.

During the coffee break Alice can see that there are many people around her who have similar color/ or pattern. She reaches out to Bob who has similar bracelet as hers. Alice is pleasantly surprised that Bobs' areas of interests are similar to hers. They are both very happy that the device has enabled them to discover each other.

In a second illustrative example, autism spectrum disorder (ASD) is the name for a group of developmental disorders. ASD includes a wide range of symptoms, skills, and levels of disability. People with ASD often have repetitive activities and routines, and a very narrow range of interests. They tend to have a bias towards shape, color. Grouping people with ASD based on their interests at an autistic centre would enable people with ASD, as well as the trainers at the autistic centre. For example, it would provide a mechanism to guide people with ASD into towards their familiar environment, or enable them in discovering people with similar interests, or it could enable the trainers in discovering ASD patients with similar activities and behaviour, thus enabling the trainers in conducting various routines for people of similar interests.

In a third illustrative example, some enterprises have hundreds of visitors at their company campus each day. Each of these hundreds of visitors have a different profile (for example, employee from different location, interview candidate, friends of employee) and different purposes for their visits. Each of these stakeholders, depending on their position might be interested in (or allowed to) visiting different locations (such as meeting rooms, hot offices, conference halls, auditoriums, galleries) on the campus. When a new visitor arrives at a campus, he is unfamiliar with the environment and hesitant to freely navigate / use the facilities of the campus.

When a visitor visits the campus, at the entrance desk he receives a bracelet according his visitor information. (for example, business group that the visitor is visiting, reason for visit, affiliation). As the visitor walks through the building he observes that entrances to many of the places in the building display the pattern that he has on his device. He understands that he is free to visit or use any of these locations. The device enables the user in getting familiar with a new setting. It facilitates a seamlessly and safe way to interact with the environment allowing the visitor to derive the most out of his visit.

An embodiment comprises a server comprising one or more processor(s), I/O interface(s), and a memory coupled to the processor(s). The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

The functions realized by the processor may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

## Claims

1. A method for facilitating social interaction between people, the method comprising the following steps in a management server (MS):
storing (S2) areas of interests provided by users,
producing (S3) different clusters of users, each cluster being based on a given area of interests,
assigning (S4) configuration codes respectively to the clusters, all the users who belong to a same cluster being assigned a same configuration code,
encoding (S4) the configuration codes respectively into two-dimensional barcodes, each two-dimensional barcode providing, once scanned by a mobile device, a device configuration code to be sent to a wearable device (WB) that configures light sources according to the received configuration code.

2. The method as claimed in claim 1, wherein light sources are light-emitting diodes.

3. The method as claimed in claim 1 or 2, wherein configuration codes are uniquely generated or selected from a pre-existing database of configuration codes.

4. The method as claimed in any of the preceding claims, wherein a device configuration code corresponds to settings to be applied for a wearable device.

5. The method as claimed in claims 2 and 4, wherein said settings specify the color and pattern of the light-emitting diodes.

6. The method as claimed in any of the preceding claims, wherein the different clusters of users are produced once an event registration is closed.

7. The method as claimed in claim 6, wherein the event registration is closed after a deadline or once a given number of users have registered.

8. The method as claimed in any of the preceding claims, wherein the two-dimensional barcode is a Quick Response code.

9. The method as claimed in any of the preceding claims, wherein areas of interests provided by users are stored in correspondence with identifiers (IdU) of the users and each identifier of user is assigned a configuration code.

10. A management server (MS) for facilitating social interaction between people, comprising:
means (CA) for storing areas of interests provided by users,
means (CA) for producing different clusters of users, each cluster being based on a given area of interests,
means (CA) for assigning configuration codes respectively to the clusters, all the users who belong to a same cluster being assigned a same configuration code,
means (CA) for encoding the configuration codes respectively into two-dimensional barcodes, each two-dimensional barcode providing, once scanned by a mobile device, a device configuration code to be sent to a wearable device (WB) that configures light sources according to the received configuration code.

11. A system for facilitating social interaction between people, comprising:
a management server (MS) arranged to
store areas of interests provided by users,
produce different clusters of users, each cluster being based on a given area of interests,
assign configuration codes respectively to the clusters, all the users who belong to a same cluster being assigned a same configuration code,
encode the configuration codes respectively into two-dimensional barcodes to be scanned by a mobile device (MD), and
a wearable device (WD) arranged to
receive a device configuration code sent from a mobile device (MD),
configure light sources according to the received configuration code.

12. A system according to claim 11, wherein the device configuration code is sent to the wearable device (WB) via a NFC link or a Bluetooth LE link.

13. A system according to claims 11 or 12, wherein means for receiving and configuring are built in a system on chip.
